Europäisches Patentamt

European Patent Office

Office européen des brevets

(19)

(11) **EP 1 054 351 A2**

(12) **EUROPEAN PATENT APPLICATION**

(43) Date of publication:
**22.11.2000 Bulletin 2000/47**

(51) Int. Cl.⁷: **G06T 7/40**

(21) Application number: **00108807.9**

(22) Date of filing: **26.04.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **20.05.1999 US 315927**

(71) Applicant:
**MITSUBISHI DENKI KABUSHIKI KAISHA Tokyo 100-8310 (JP)**

(72) Inventor: **Knittel, James M.
Groton, Massachusetts 01450 (US)**

(74) Representative:
**Pfenning, Meinig & Partner
Mozartstrasse 17
80336 München (DE)**

(54) **Method and apparatus for classifying intensity values of volume data using a reconfigurable look-up table**

(57)    An apparatus for classifying voxel intensity values in a rendering pipeline includes a memory table having a fixed number of entries. Each entry of the table stores color value corresponding to one of the voxel intensity values. A first register stores an intensity value to be classified. A second register stores a configuration size value which partitions the table into a predetermined number of sub-tables. A third register stores a table select value. A multiplexer, connected to the first, second, and third registers, forms an index to a selected one of the sub-tables to produce a color value corresponding to the intensity value to be classified.

**EP 1 054 351 A2**

## Description

### FIELD OF THE INVENTION

This invention relates generally to volume rendering, and more particularly, to classifying intensity values of a volume data set.

### BACKGROUND OF THE INVENTION

### Introduction to Volume Rendering

Volume rendering is often used in computer graphics applications where three-dimensional data need to be visualized. The volume data can be scans of physical or medical objects, or atmospheric, geophysical, or other scientific models where visualization of the data facilitates an understanding of the underlying real-world structures represented by the data.

With volume rendering, the internal structure, as well as the external surface features of physical objects and models are visualized. Voxels are usually the fundamental data items used in volume rendering. A voxel is a data item that represents a particular three-dimensional portion of the object or model. Consequently, voxels are typically organized as an array in a computer memory. The array coordinates $(x, y, z)$ of each voxel map the voxels to portions of the represented object or model.

### Rendering Pipeline

Volume rendering can be done by software or hardware. In one prior art hardware implementation, as shown in Figure 1, the hardware is arranged as a multi-stage pipeline, see U.S. Patent Application 09/190,643 "Fast Storage and Retrieval of Intermediate Values in a Real-Time Volume Rendering System," filed by Kappler et al. on Nov. 12, 1998.

The input to a pipeline 100 are voxels 102 stored in a voxel memory 101, and the output of the pipeline are pixel 108 stored in a pixel memory 109. The stages of the pipeline 100 interpolate 110 the voxels 102 for a particular point of view to produce samples 103. During interpolation, the neighborhood of a voxel is examined, and values are assigned to sample points along rays. Typically, one can sample using linear, probabilistic, or nearest neighbor interpolation. The samples 103 have their gradients 104 estimated 120. Gradients indicate surface normals. The samples 103 are classified, and then illuminated according to the estimated gradients 104 in stage 130. Last, the illuminated samples 106 are composited 140 along rays to pixel values 108.

### Classification

The primary data associated with each voxel are its coordinates in three-dimensional space, and its "intensity." Depending on how the data are acquired, intensity values in the prior art can be either 8, 12, or 16 bits. For a given volume, intensity values can be physical parameters, such as, density, tissue type, elasticity, velocity, to name but a few. For "scanned" objects, the intensity values depends on the scanning technique, e.g., MRI, CT, Ultrasound, etc, for models the intensity values can be any numerical value representing some volume characteristic to be explored.

During rendering, the intensity values need to be convened to color and opacity (RGBa) values which can be projected onto a two-dimensional image plane for viewing. This is the process called classification.

In the prior art, the conversion from intensity to RGBa values is typically performed using a table look-up. For example, if the intensity is an eight bit integer value in the range of [0, ..., 255], then table with 256 entries is used, and the intensity is merely in index to the table.

The problem with prior art classification techniques is that the tables are designed for a particular voxel format. However, voxel intensities often have other formats, for example, twelve or sixteen bits. In pipeline implementation, where, for processing efficiency, the table needs to be "on-chip" this presents some problems. If the on-chip memory is designed for, lets say, twelve bits, then eight bit values need to be expanded, and sixteen bit values need to be truncated.

Typically, the number of entries in the look-up table is chosen based upon the maximum supported voxel size. However, if a 16-bit table index were supported, the amount of on-chip RAM to support it (64Kx36) would be excessive. Thus, 12-bit indexes, or 4K entry tables, seem to be the largest number of entries considered. Many software implementations use only 8-bit indexes (256 entry tables) for classification. Given this, a fixed size of 256x36 or 4Kx36 is typically chosen. All voxels presented for classification are then either expanded or reduced in precision to match the number of entries available for classification.

Depending upon the width of data paths in a rendering pipeline, it may take between 4K and 8K pipeline clock cycles to load or reload a 4Kx36 look-up table. This is not extremely significant when rendering large datasets on the order of $256^3$ voxels (0.2% of the pipeline clock cycles in a 4 pipeline design). However, if many smaller volumes, on the order of $32^3$ voxels, are rendered, then the reload of the table can take upwards of 50% of the pipeline clock cycles to render a dataset.

Table data may also have to be pushed or pulled from the system memory to the pipeline memory via a system bus. This can take upwards of one MByte/second of bandwidth on a 32-bit, 33 MHz PCI bus, when rendering only one object at 30 frames/second. Many other types of data (such as setup information and rendered image baseplanes) must be pushed and/or pulled to and from the volume rendering device at this 30 frames/second rate. If one wishes to render many smaller objects, at the same frame rate, the transfer time for the full 4Kx36 look-up table can become very significant.

In addition to the pipeline loading and bus transfer delays, there is also software overhead in computing and/or transferring 4K entries vs. 256 entries. Software implementations typically re-compute at least the opacity portion of the look-up table any time the view changes on the object.

Therefore, it is desired to improve on these prior art deficiencies of voxel classification. More particularly, it is desired to perform efficient and flexible classification as a stage of a hardware rendering pipeline.

## SUMMARY OF THE INVENTION

An apparatus for classifying voxel intensity values in a rendering pipeline includes a memory table having a fixed number of entries. Each entry of the table stores color value corresponding to one of the voxel intensity values. A first register stores an intensity value to be classified.

A second register stores a configuration size value which partitions the table into a predetermined number of sub-tables. A third register stores a table select value. A multiplexer, connected to the first, second, and third registers, forms an index to a selected one of the sub-tables to produce a color value corresponding to the intensity value to be classified.

The invention is particularly useful where the load time for look-up tables can approach rendering time

## BRIEF DESCRIPTION OF THE DRAWINGS

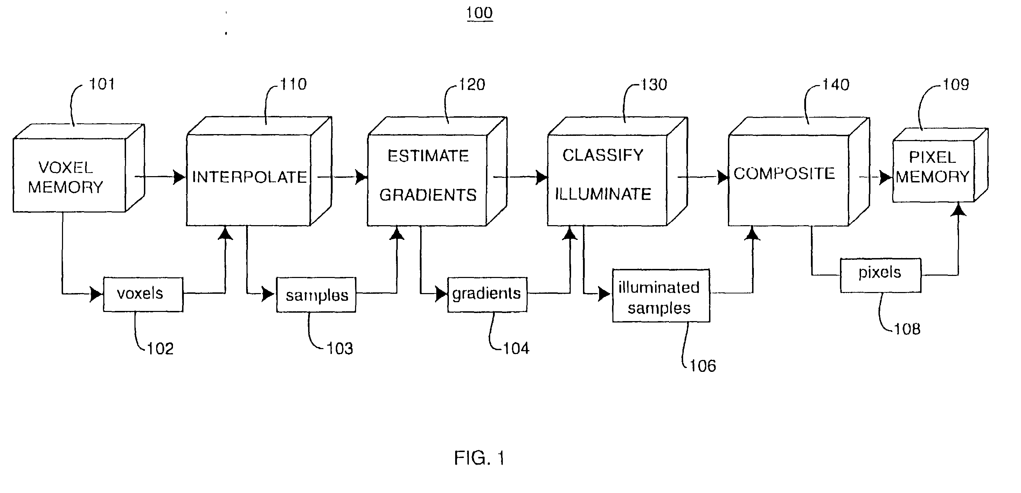

Figure 1 is a block diagram of a rendering pipeline using a reconfigurable table according to the invention; and

Figure 2a is a block diagram of values used to select a look-up table size; and

Figure 2b is a block diagram of a reconfigurable look-up table.

## DETAILED DESCRIPTION OF PREFERRED EMBODIMENTS

The invention provides a classification look-up table (CLUT) that has the flexibility of a 4K entry CLUT, and the speed of a 256 entry CLUT. The basic concept is to treat the previously indivisible 4Kx36 CLUT as a resource of *N* (4K/*N*)x36 CLUTs (where *N* is a number in the range of one to sixteen, for example.

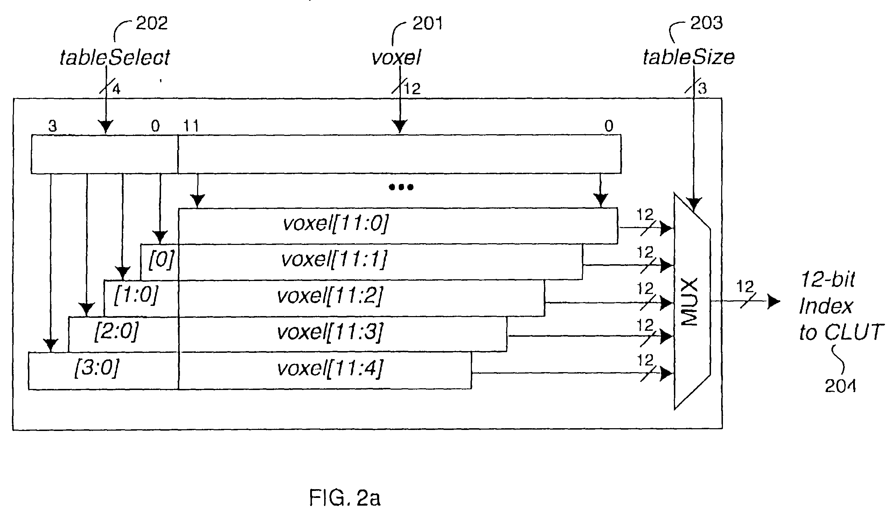

Software can then choose the appropriate CLUT size for a particular application, trading off CLUT precision with its computing, transferring and loading delays. Figure 2a shows how a 12 bit index 204 generated for the table entries, where *N* is, for example 16.

The input values are a voxel intensity 201, a table select 202, and a table size 203. The 12-bit voxel intensity is reduced to the number of bits required for the CLUT size selected by the *tableSize* field. When reducing the voxel size, the *X* most significant bits of the voxel are preserved, i.e., discarding the least significant bits. The appropriate number of bits are then taken from the *S* least significant bits of the *tableSelect* field so that the total number of bits is 12: $X + S = 12$.

This 12-bit combined value indexes the full 4Kx36 CLUT. With this mechanism, the user can specify that an object be rendered with a 256 or 512 or 1K or 2K or 4K entry CLUT. The CLUT data transfer and load time is reduced for the smaller size tables as only the selected portion of the CLUT is loaded and used for classifying voxels.

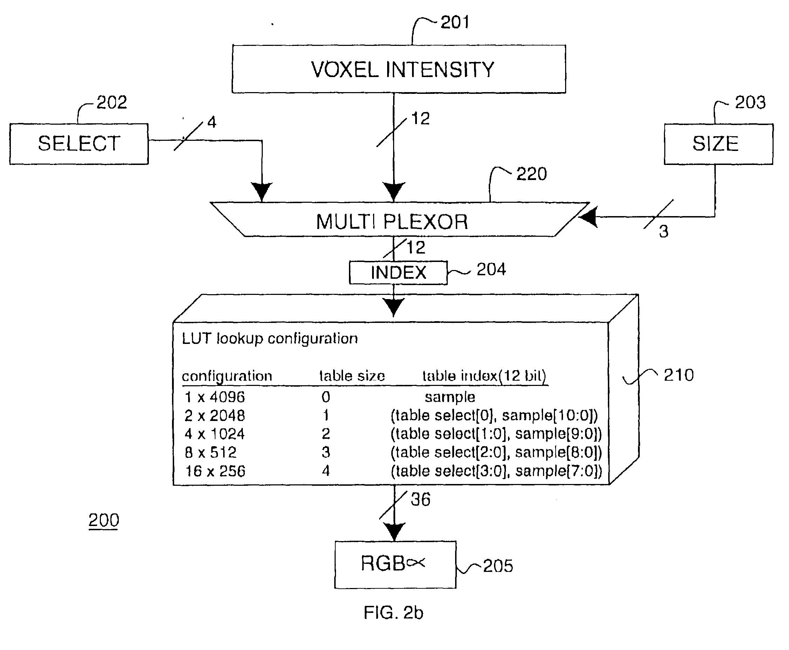

Figure 2b shows a voxel classification logic circuit 200 according to the present invention as described above. The circuit includes three input registers 201-203 respectively storing the voxel intensity, table select, and table size. The three input registers are used to compute the index 204 for a reconfigurable table 210 via a multiplexer 220.

The output from the table 210 is a RGB☐ value stored in a fourth register 205. In the example circuit 200, register 201 is 12 bits, register 202 is 4 bits, register 203 is 3 bits. Register 205 is 36 bits, eight bits for each color, and 12 bits for opacity.

The number of bits of the intensity register 201 determines the largest possible intensity value. The number of bits of the RGB color register 205 is identical to the number of bits in each entry of the table 210, here eight. The number of bits in the size register 203 determines the maximum number of tables that can be configured, for example, sixteen.

During an initialization step, the circuit 200 operates as follows. The size register 203 is set to select a table configuration, for example, one table of 4096 entries, two tables of 2048 entries, four tables of 1024 entries, eight tables of 512 entries, or sixteen tables of 256 entries. After the table configuration has been selected, the table itself can be loaded with RGB color values.

During actual classification, a voxel intensity value is stored in register 201, and a particular table is selected by storing a value in the select register 202. The multiplexer 220 combines these two values to form an index to the table 210 and to read out the appropriate RGB value into register 205.

The invention has a number of advantages over prior art classification look-up tables. The invention enables a smaller table size to be computed, transferred across PCI, and loaded into the working table. This saves time on the CPU and rendering. Having multiple tables allows a user to save and experiment with up to 16 different tables before choosing the final one and switching back to 4K entries from 256. Supporting smaller table sizes allows easy experimentation in the actual hardware to see the effect of smaller tables on image quality in real time for future implementations. When rendering multiple smaller objects, the table according to the e invention allows up to 16 unique LUTs, one per object, to be used and left programmed "on-chip," eliminating the need to transfer CLUT data across a system bus, or reload the CLUT in the pipelines. The time to load color and opacity tables is greatly reduced.

It is to be understood that various other adaptations and modifications may be made within the spirit and scope of the invention. Therefore, it is the object of the appended claims to cover all such variations and modifications as come within the true spirit and scope of the invention.

**Claims**

1. An apparatus for indexing a fixed size table, comprising:

    a memory table having a fixed number of entries, each entry storing an output value;
    a first register storing an input value to look-up;
    a second register storing a configuration size value, the configuration size value partitioning the memory table into a predetermined number of sub-tables;
    a third register storing a table select value;
    a multiplexer, connected to the first, second, and third registers, forming an index value to a selected one of the sub-tables to produce a particular output value corresponding to the index value.

2. The apparatus of claim 1 wherein the input value is reduced to the number of bits required for a particular configuration size value by discarding the least significant number of bits of the input value.

3. The apparatus of claim 2 wherein the reduced size input value is increased by the adding the table select value as high order bit of the input value.

4. The apparatus of claim 1 wherein the input value is a voxel intensity of a voxel, and the output value is a RGB. value to classify the voxel.

5. The apparatus of claim 1 wherein the indexing of the memory table are performed in a volume rendering pipeline.

6. A method for indexing a fixed size table, comprising:

    storing output values in entries of a fixed size table;
    storing an input value to look-up in the table in a first register;
    storing a configuration size value in a second register, the configuration size value partitioning the memory table into a predetermined number of sub-tables;
    storing a table select value in a third register;
    forming an index value to a particular entry in a selected one of the sub-tables to produce a particular output value corresponding to the index value.

7. The method of claim 6 wherein the input value is reduced to the number of bits required for a particular configuration size value by truncating the least significant number of bits of the input value.

8. The method of claim 6 wherein the reduced size input value is increased by the adding the table select value as high order bit of the input value.

9. The method of claim 6 wherein the input value is a voxel intensity of a voxel, and the output value is a RGB. value to classify the voxel.

EP 1 054 351 A2

100

FIG. 1

FIG. 2a

EP 1 054 351 A2

```
                          ┌─ 201
      ┌──────────────────────────────────────┐
      │           VOXEL INTENSITY             │
      └──────────────────────────────────────┘
┌─ 202                    │ 12              ┌─ 203
┌──────────────┐          │          ┌──────────────┐
│   SELECT     │──4──┐    │          │    SIZE      │
└──────────────┘     │    │          └──────────────┘
                     │    │    ┌─ 220         │
              ┌──────▼────▼────────────────────────┐
              │          MULTI PLEXOR        ◄──3───┘
              └──────────────┬─────────────────────┘
                             │ 12
                      ┌──────────────┐
                      │    INDEX     │── 204
                      └──────────────┘
                             │
```

LUT lookup configuration                                     — 210

| configuration | table size | table index(12 bit) |
|---|---|---|
| 1 x 4096 | 0 | sample |
| 2 x 2048 | 1 | (table select[0], sample[10:0]) |
| 4 x 1024 | 2 | (table select[1:0], sample[9:0]) |
| 8 x 512 | 3 | (table select[2:0], sample[8:0]) |
| 16 x 256 | 4 | (table select[3:0], sample[7:0]) |

200

```
                             │ 36
                      ┌──────────────┐
                      │    RGB∝      │── 205
                      └──────────────┘
```

FIG. 2b